# EUROPÄISCHE PATENTSCHRIFT

(11) **EP 3 841 040 B1**
(45) Veröffentlichungstag und Bekanntmachung des Hinweises auf die Patenterteilung: **06.08.2025**
(21) Anmeldenummer: 19755371.2
(22) Anmeldetag: 15.08.2019
(51) Int. Cl.: B65G 23/44, B65G 39/16, B65G 57/06, B65G 57/24

(54) **ABSETZBAND FÜR EINE PALETTIERVORRICHTUNG**
DISCHARGE BELT FOR A PALLETISING DEVICE
BANDE DE DÉPÔT DESTINÉE À UN DISPOSITIF DE PALETTISATION

(30) Priorität: 21.08.2018 DE 102018214048
(43) Veröffentlichungstag der Anmeldung: 30.06.2021
(73) Patentinhaber: Körber Supply Chain Automation Eisenberg GmbH, 67304 Eisenberg (DE)
(72) Erfinder: BLASIUS, Christopher, 67725 Börrstadt (DE)
(74) Vertreter: Hörschler, Wolfram Johannes
(86) Internationale Anmeldenummer: PCT/EP2019/071951
(87) Internationale Veröffentlichungsnummer: WO 2020/038829

(56) Entgegenhaltungen:
- CN-A- 105 000 325
- CN-U- 205 058 864
- DE-A1- 102015 101 118
- JP-A- S58 125 507
- KR-A- 20130 046 573

## Beschreibung

Die Erfindung betrifft ein Absetzband für eine Palettiervorrichtung, umfassend einen umlaufenden Fördergurt, welcher eine Förderfläche zur Förderung von Gütern definiert, eine um eine erste Drehachse drehbare erste Umlenkrolle und eine um eine Spannachse drehbare Spannrolle, welche in eine Spannrichtung bewegbar ist. Die Erfindung betrifft auch eine Palettiervorrichtung, welche mindestens ein erfindungsgemäßes Absetzband umfasst.

### Stand der Technik

Eine Palettiervorrichtung dient dazu, Güter, insbesondere Stückgüter, oder Gebinde zum Transport auf Paletten anzuordnen. Dazu werden die Güter beispielsweise zunächst zu einzelnen Lagen zusammengefasst und dann lagenweise auf einer Palette, beziehungsweise auf einem bereits auf der Palette befindlichen Lagenstapel, abgesetzt. Eine solche Palettiervorrichtung ist beispielsweise aus dem Dokument EP 2 881 347 B1 bekannt.

CN 105000325 A offenbart die Merkmale des Oberbegriffs des Anspruchs 1. Die genannte Druckschrift offenbart ein umlaufendes Förderband , das über zwei Umlenkwalzen geführt und im unteren Lasttrum über eine Mehrzahl von Walzen geführt wird, von denen eine vorgespannt ist. Die vorgespannte Walze erfährt ihre Vorspannung durch Belastung mit einem ausfahrbaren Kolben, der die Spannwalze, die senkrecht zur Umlaufrichtung des Transportbands orientiert ist, vorspannt. Dies kann beispielsweise über einen Pneumatikzylinder oder über eine Federeinrichtung oder dergleichen erfolgen, sodass der Lasttrum innerhalb des unteren Bereichs des Transportwegs des Transportbands stets unter einer ausreichenden Spannung gehalten ist.

Zur Palettierung durchlaufen die Güter oder Gebinde normalerweise zunächst eine Zuführvorrichtung, in der die zunächst einreihig oder mehrreihig hintereinander ankommenden Güter oder Gebinde zu stapelfähigen Lagen verschoben und/oder zusammengestellt werden. Die stapelfähigen Lagen werden dann nacheinander an die Palettiervorrichtung übergeben, welche die Lagen auf einem gewünschten Stapelplatz, insbesondere auf einer Palette, absetzt.

Die Palettiervorrichtung umfasst dazu beispielsweise einen Ablagetisch, in einer Weiterentwicklung ein Absetzband, welches einen umlaufenden Fördergurt umfasst. Der Fördergurt definiert eine Förderfläche zur Förderung der Güter oder Gebinde, beziehungsweise der Lagen. Das Absetzband der Palettiervorrichtung ist in der Regel an einer Hubeinrichtung vertikal beweglich.

Bei der Palettierung wird jeweils eine stapelfähige Lage von der Zuführvorrichtung auf die Förderfläche des Absetzbandes gefördert. Das Absetzband wird vertikal auf die dem Lagenstapel entsprechende Höhe verfahren. Anschließend wird die Lage auf dem Lagenstapel abgesetzt. Die unterste Lage eines Lagenstapels wird dabei direkt auf der Palette abgesetzt.

Im Betrieb des Absetzbandes kann es vorkommen, dass der Fördergurt seitlich auswandert oder verläuft. Dieser Effekt tritt verstärkt bei Fördergurten auf, bei denen eine Länge der Förderfläche annähernd gleich einer Breite der Förderfläche ist. Wenn die Länge der Förderfläche wesentlich größer als die Breite der Förderfläche ist, so tritt dieser Effekt nur in verringertem Ausmaß auf.

Aus dem Dokument DD 68 859 A1 ist eine Bandkantenregeleinrichtung für Förderbänder, insbesondere für Kartoffelerntemaschinen, bekannt. Dabei ist ein umlaufendes Band über zwei zueinander versetzt angeordnete Walzen geführt. Durch Schwenken einer der beiden Walzen relativ zu der anderen Walze wird einem seitlichen Auswandern des Bandes entgegen gewirkt. Zum Schwenken der Walze ist ein Motor mit einer Spindel vorgesehen.

Das Dokument EP 2 995 421 A1 offenbart eine Schleifmaschine mit einem umlaufenden Schleifband, das über eine Schleifwalze und über eine Spannwalze geführt ist. Die Spannwalze kann mittels eines Stellgliedes um eine Achse verschwenkt werden um eine Lage des Bandes einzustellen. Zur Positionserkennung des Schleifbandes ist ein Lagedetektor vorgesehen, der als Gabellichtschranke ausgestaltet ist. Der Lagedetektor ist mit einem Regler verbunden, welcher das Stellglied ansteuert.

Aus dem Dokument DE 10 2012 005 439 A1 ist eine Vorrichtung zum Beeinflussen einer laufenden Warenbahn bekannt. Die Vorrichtung weist dabei eine verstellbare Walze auf, welche die Warenbahn umlenkt.

### Aufgabe

Aufgabe der vorliegenden Erfindung ist es, ein Absetzband für eine Palettiervorrichtung der eingangs genannten Art zu verbessern. Insbesondere ist es Aufgabe der Erfindung, eine Bandkantenregelung des Absetzbandes während des Betriebs der Palettiervorrichtung zu ermöglichen, wobei eine Förderfläche unverändert bleibt.

### Lösung

Diese Aufgabe wird durch ein Absetzband für eine Palettiervorrichtung mit den Merkmalen des Anspruchs 1 gelöst. Vorteilhafte Ausgestaltungen und Weiterbildungen der Erfindung sind Gegenstand der Unteransprüche.

Ein gattungsgemäßes Absetzband für eine Palettiervorrichtung umfasst einen umlaufenden Fördergurt, welcher eine Förderfläche zur Förderung von Gütern definiert, eine um eine erste Drehachse drehbare erste Umlenkrolle und eine um eine Spannachse drehbare Spannrolle. Die Spannrolle ist dabei in eine Spannrichtung bewegbar.

Der Fördergurt liegt an der ersten Umlenkrolle und an der Spannrolle an. Die Spannrolle ist relativ zu der ersten Umlenkrolle bewegbar. Durch eine Bewegung der Spannrolle relativ zu der ersten Umlenkrolle in die Spannrichtung kann eine mechanische Spannung des Fördergurts eingestellt werden.

Erfindungsgemäß ist eine um eine zweite Drehachse drehbare zweite Umlenkrolle vorgesehen. Dabei verläuft die zweite Drehachse parallel zu der ersten Drehachse. Die Spannrolle ist derart bewegbar, dass die Spannachse geneigt zu der ersten Drehachse und geneigt zu der zweiten Drehachse verläuft.

In einem optimalen Betriebszustand des Absetzbandes ist der Fördergurt homogen ausgestaltet und läuft in einem zentralen Bereich über die erste Umlenkrolle, die zweite Umlenkrolle und die Spannrolle. Die Spannachse verläuft dabei parallel zu der ersten Drehachse. Wenn der Fördergurt in einem realen Betrieb des Absetzbandes seitlich, also in axiale Richtung bezüglich der ersten Drehachse, auswandert, so kann dies durch eine entsprechende Bewegung der Spannrolle korrigiert werden. Dabei kann die Spannrolle derart bewegt werden, dass die Spannachse nicht mehr parallel sondern geneigt zu der ersten Drehachse und geneigt zu der zweiten Drehachse verläuft. Durch eine entsprechende Bewegung der Spannrolle ist somit eine Bandkantenregelung des Absetzbandes ermöglicht.

Das Absetzband ist derart ausgestaltet, dass die Förderfläche zur Förderung von Gütern sich im Wesentlichen zwischen der ersten Umlenkrolle und der zweiten Umlenkrolle erstreckt. Seitlich ist die Förderfläche von den Bandkanten des Fördergurts begrenzt. Die Förderfläche ist somit in Form eines Rechtecks ausgestaltet. Die rechteckige Form der Förderfläche bleibt auch erhalten, wenn die Spannrolle derart bewegt wird, dass die Spannachse geneigt zu der ersten Drehachse und geneigt zu der zweiten Drehachse verläuft. Die Förderfläche bleibt somit unabhängig von einer Ausrichtung der Spannrolle sowie der Spannachse unverändert. Durch die Bandkantenregelung des Absetzbandes erfolgt also keine Veränderung der Förderfläche.

Wenn eine Zuführvorrichtung zur Zuführung der zu palettierenden Güter oder Lagen vorgesehen ist, so kann der Palettierer derart ausgerichtet werden, dass ein Abstand zwischen der Zuführvorrichtung und der Förderfläche minimal ist. Durch die Bandkantenregelung des Absetzbandes entsteht vorteilhaft ein minimaler Spalt zwischen der Zuführvorrichtung und der Förderfläche. Dadurch ist die Gefahr, dass zu palettierenden Güter bei der Übergabe von der Zuführvorrichtung auf die Förderfläche umfallen, verringert.

Erfindungsgemäß ist die Spannrolle um eine Schwenkachse schwenkbar. Besonders vorteilhaft verläuft die Schwenkachse rechtwinklig zu der ersten Drehachse. Bevorzugt verläuft die Schwenkachse auch rechtwinklig zu der Förderfläche des Fördergurts. Die Schwenkachse kann auch parallel oder in einem anderen Winkel zu der Förderfläche des Fördergurts verlaufen.

Gemäß einer möglichen Ausgestaltung der Erfindung schneidet die Spannachse die Schwenkachse. Gemäß einer anderen möglichen Ausgestaltung der Erfindung sind die Spannachse und die Schwenkachse windschief zueinander ausgerichtet und schneiden sich daher nicht.

Erfindungsgemäß ist die Schwenkachse in einem ersten axialen Endbereich der Spannrolle angeordnet. Gemäß einer möglichen Ausgestaltung der Erfindung durchragt die Schwenkachse die Förderfläche. Gemäß einer anderen möglichen Ausgestaltung der Erfindung verläuft die Schwenkachse seitlich neben der Förderfläche oder parallel zu der Förderfläche.

Gemäß einer vorteilhaften Weiterbildung der Erfindung sind in einem zweiten axialen Endbereich der Spannrolle, welcher dem ersten axialen Endbereich der Spannrolle gegenüber liegt, Stellmittel zum Bewegen der Spannrolle in die Spannrichtung vorgesehen. Bei einer entsprechenden Betätigung durch die Stellmittel wird die Spannrolle um die Schwenkachse geschwenkt. Dadurch ändert sich die Ausrichtung der Spannachse.

Bevorzugt umfassen die Stellmittel im zweiten axialen Endbereich der Spannrolle einen Stellmotor und ein Spindelgetriebe. Besonders bevorzugt umfasst das Absetzband auch eine Sensoreinheit zur Erkennung mindestens einer Bandkante des Fördergurts und eine elektronische Regeleinrichtung. Die Regeleinrichtung ist dabei mit der Sensoreinheit und mit dem Stellmotor verbunden, beispielsweise über Datenleitungen oder ein Bussystem. Wenn die Sensoreinheit einen seitlichen Versatz der Bandkante des Fördergurts detektiert, so steuert die Regeleinrichtung den Stellmotor entsprechend an. Dadurch wird die Spannrolle derart um die Schwenkachse geschwenkt, dass der besagte seitliche Versatz der Bandkante wieder ausgeglichen wird.

Erfindungsgemäß sind in dem ersten axialen Endbereich der Spannrolle Spannmittel zum Bewegen der Spannrolle in die Spannrichtung vorgesehen. Bei einer entsprechenden Betätigung durch die besagten Spannmittel wird die Spannrolle bewegt, wodurch die mechanische Spannung des Fördergurts eingestellt wird. Vorzugsweise umfasst das Absetzband auch eine Sensoreinheit zur Erkennung der mechanischen Spannung des Fördergurts.

Erfindungsgemäß umfassen die Spannmittel eine manuell betätigbare Gewindespindel. Eine manuell betätigbare Gewindespindel ist verhältnismäßig kostengünstig.

Vorzugsweise verläuft die Spannrichtung rechtwinklig zu der ersten Drehachse sowie rechtwinklig oder tangential zu der Schwenkachse. Bevorzugt verläuft die Schwenkachse auch parallel zu der Förderfläche des Fördergurts. Die Spannrichtung kann auch rechtwinklig oder in einem anderen Winkel zu der Förderfläche des Fördergurts verlaufen.

Gemäß einer vorteilhaften Weiterbildung der Erfindung ist eine um eine dritte Drehachse drehbare dritte Umlenkrolle vorgesehen. Dabei verläuft die dritte Drehachse parallel zu der ersten Drehachse.

Gemäß einer weiteren vorteilhaften Weiterbildung der Erfindung ist eine um eine Antriebsachse drehbare Antriebstrommel vorgesehen. Dabei verläuft die Antriebsachse parallel zu der ersten Drehachse. Der Antriebstrommel ist vorzugsweise ein elektrischer Antriebsmotor zugeordnet, welcher die Antriebstrommel rotatorisch antreibt.

Die Aufgabe wird auch durch eine Palettiervorrichtung mit den Merkmalen des Anspruchs 10 gelöst. Die erfindungsgemäße Palettiervorrichtung umfasst dabei mindestens ein erfindungsgemäßes Absetzband.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Die Figuren stellen den Gegenstand der Erfindung nur schematisch dar. Es zeigen:
- Figur 1: eine schematische Frontansicht einer Palettiervorrichtung,
- Figur 2: eine Draufsicht auf ein Absetzband,
- Figur 3: eine Schnittdarstellung des Absetzband entlang der Schnittlinie A-A in Figur 2 und
- Figur 4: eine Draufsicht auf eine Spannstation.

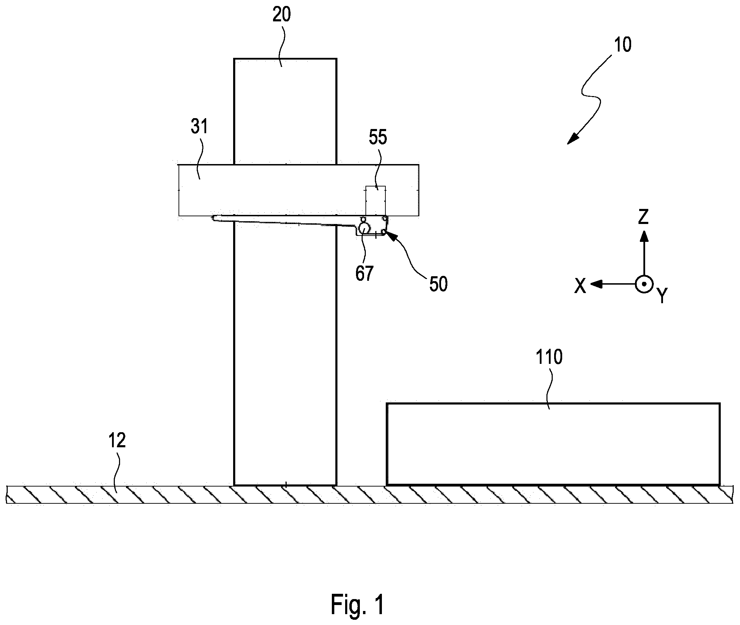

Figur 1 zeigt eine schematische Frontansicht einer Palettiervorrichtung 10. Die Palettiervorrichtung 10 steht auf einem Fußboden 12 und dient zum Absetzen von hier nicht dargestellten Gütern auf einer hier ebenfalls nicht dargestellten Palette. Die Güter werden der Palettiervorrichtung 10 von einer Zuführvorrichtung 110 zugeführt. Dabei werden die Güter von der Zuführvorrichtung 110 zunächst zu stapelfähigen Lagen zusammengefasst und anschließend in eine Längsrichtung X weiter zu der Palettiervorrichtung 10 transportiert. Die Längsrichtung X verläuft parallel zu dem Fußboden 12.

Die Palettiervorrichtung 10 umfasst eine Hubvorrichtung 20, welche sich im Wesentlichen in eine Vertikalrichtung Z von dem Fußboden 12 weg erstreckt. Die Vertikalrichtung Z verläuft rechtwinklig zu dem Fußboden 12 und rechtwinklig zu der Längsrichtung X.

An der Hubvorrichtung 20 ist ein Wagen 31 angeordnet, welcher in Vertikalrichtung Z beweglich ist. An dem Wagen 31 ist ein Absetzband 50 befestigt. Das Absetzband 50 ist somit in Vertikalrichtung Z relativ zu der Hubvorrichtung 20 beweglich. Das Absetzband 50 ist zusätzlich in Längsrichtung X relativ zu dem Wagen 31 und der Hubvorrichtung 20 beweglich. Das Absetzband 50 weist einen Antriebsmotor 55 auf, welcher zum Antrieb einer Antriebstrommel 67 dient.

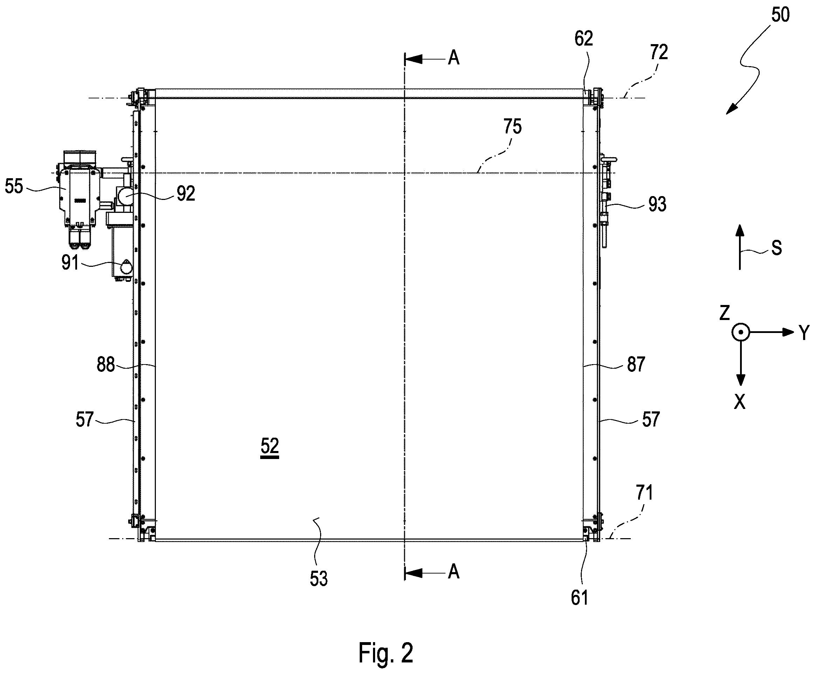

Figur 2 zeigt eine Draufsicht auf das in Figur 1 dargestellte Absetzband 50 der Palettiervorrichtung 10. Die Hubvorrichtung 20 sowie der daran angeordnete Wagen 31 sind dabei nicht dargestellt.

Das Absetzband 50 umfasst eine erste Umlenkrolle 61, welche um eine erste Drehachse 71 drehbar ist. Das Absetzband 50 umfasst auch eine zweite Umlenkrolle 62, die um eine zweite Drehachse 72 drehbar ist. Ferner umfasst das Absetzband 50 eine hier nicht dargestellte Spannrolle 65, die um eine Spannachse 75 drehbar ist. Die erste Drehachse 71 und die zweite Drehachse 72 verlaufen parallel zueinander in eine Querrichtung Y, welche rechtwinklig zu der Längsrichtung X und rechtwinklig zu der Vertikalrichtung Z orientiert ist.

Das Absetzband 50 umfasst auch einen umlaufenden Fördergurt 52, welcher eine Förderfläche 53 zur Förderung der Güter, beziehungsweise der Lagen, definiert. Die Förderfläche 53 erstreckt sich in einer Ebene, welche durch die Längsrichtung X und die Querrichtung Y definiert ist. Die Vertikalrichtung Z verläuft somit rechtwinklig zu der Förderfläche 53.

Die Förderfläche 53 erstreckt sich in der Längsrichtung X im Wesentlichen zwischen der ersten Umlenkrolle 61 und der zweiten Umlenkrolle 62. In der Querrichtung Y ist die Förderfläche 53 von einer ersten Bandkante 87 und einer zweiten Bandkante 88 des Fördergurts 52 begrenzt. Die Förderfläche 53 des Fördergurts 52 ist rechteckig, vorwiegend annähernd quadratisch, ausgestaltet. Die Förderfläche 53 weist eine Ausdehnung in Querrichtung Y auf, welche auch als Breite bezeichnet wird. Die Förderfläche 53 weist eine Ausdehnung in Längsrichtung X auf, welche auch als Länge bezeichnet wird. Die Breite der Förderfläche 53 entspricht vorliegend also zumindest annähernd der Länge der Förderfläche 53.

Das Absetzband 50 weist zwei Seitenwände 57 auf, welche sich vorwiegend in Längsrichtung X erstrecken und parallel zueinander verlaufen. Die erste Umlenkrolle 61, die zweite Umlenkrolle 62 sowie die Spannrolle 65 sind in den Seitenwänden 57 gelagert. Der Abstand der Seitenwände 57 zueinander ist geringfügig größer als die Breite der Förderfläche 53.

Das Absetzband 50 umfasst ferner einen Stellmotor 91 und ein Spindelgetriebe 92 zur Einwirkung auf die hier nicht gezeigte Spannrolle 65. Der Stellmotor 91 und das Spindelgetriebe 92 sind an einer der beiden Seitenwände 57 befestigt. Auch der Antriebsmotor 55 ist an dieser Seitenwand 57 befestigt. Ferner umfasst das Absetzband 50 eine Gewindespindel 93, ebenfalls zur Einwirkung auf die hier nicht dargestellte Spannrolle 65. Die Gewindespindel 93 ist an der anderen der beiden Seitenwände 57 befestigt.

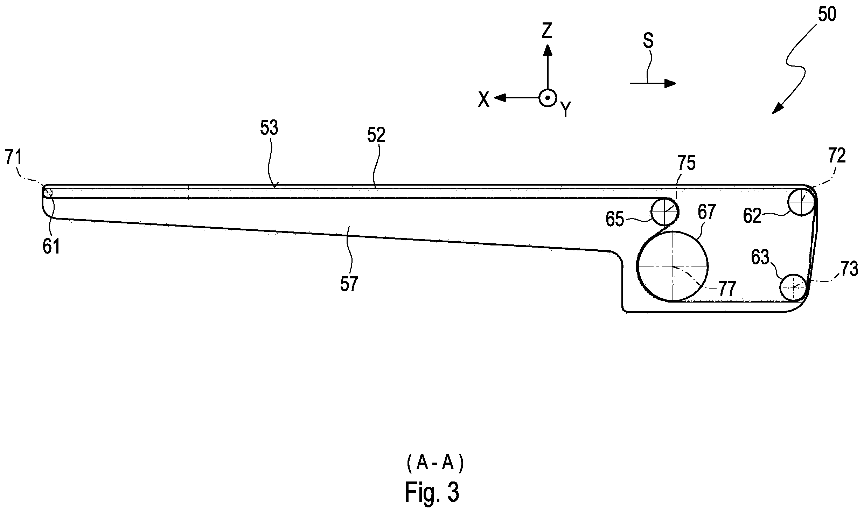

Figur 3 zeigt eine Schnittdarstellung des Absetzbandes 50 aus Figur 2 entlang der dort eingezeichneten Schnittlinie A-A. Das Absetzband 50 umfasst, wie bereits erwähnt, die um die erste Drehachse 71 drehbare erste Umlenkrolle 61, sowie die um die zweite Drehachse 72 drehbare zweite Umlenkrolle 62 und den umlaufenden Fördergurt 52.

Das Absetzband 50 umfasst ferner die bereits erwähnte Spannrolle 65, die um die Spannachse 75 drehbar ist. Optional umfasst das Absetzband 50 eine dritte Umlenkrolle 63, welche um eine dritte Drehachse 73 drehbar ist. Ferner umfasst das Absetzband 50 die Antriebstrommel 67, welche um eine Antriebsachse 77 drehbar ist, und welche von dem hier nicht dargestellten Antriebsmotor 55 antreibbar ist.

Die erste Drehachse 71, die zweite Drehachse 72, die dritte Drehachse 73 und die Antriebsachse 77 verlaufen parallel zueinander in die Querrichtung Y. Dabei sind insbesondere die dritte Drehachse 73 sowie die Antriebsachse 77 von der ersten Drehachse 71 und der zweiten Drehachse 72 in Vertikalrichtung Z beabstandet angeordnet. Damit sind die dritte Umlenkrolle 63 sowie die Antriebstrommel 67 auch von der Förderfläche 53 des Fördergurts 52 in Vertikalrichtung Z beabstandet angeordnet.

Die Antriebstrommel 67 dient zum Antrieb des Fördergurts 52. Wenn der Fördergurt 52 von der Antriebstrommel 67 angetrieben wird, bewegt sich ein auf der Förderfläche 53 befindliches Gut in die Längsrichtung X, insbesondere in Richtung auf die erste Drehachse 71 zu.

Die Spannrolle 65 ist in eine Spannrichtung S bewegbar. Die Spannrolle 65 ist dabei derart in die Spannrichtung S bewegbar, dass die Spannachse 75 geneigt zu der ersten Drehachse 71 und geneigt zu der zweiten Drehachse 72 verläuft. Die Spannrichtung S erstreckt sich dabei parallel zu der Längsrichtung X, und somit rechtwinklig zu der Querrichtung Y und rechtwinklig zu der Vertikalrichtung Z.

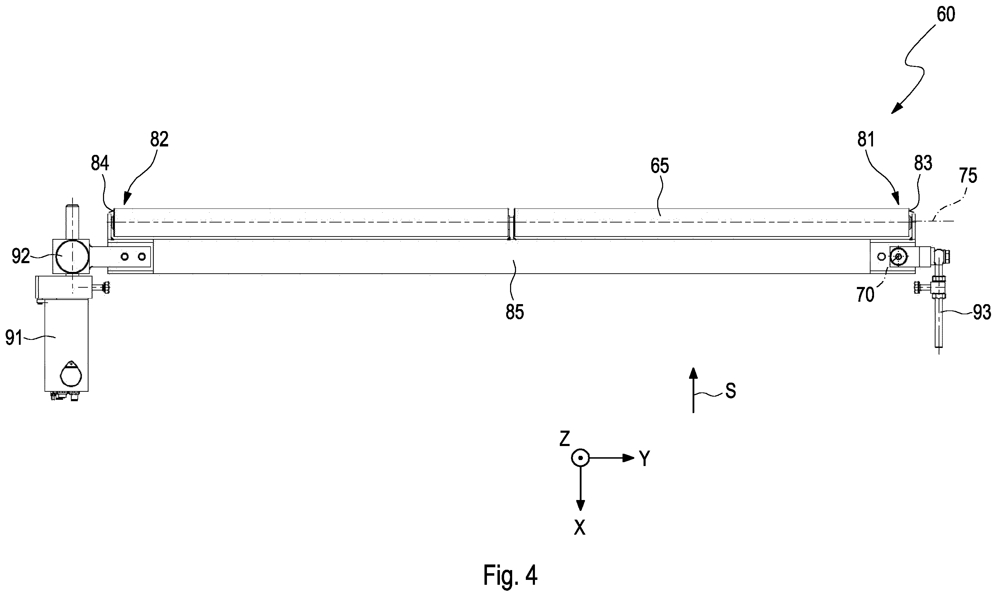

Figur 4 zeigt eine Draufsicht auf eine Spannstation 60 des in Figur 2 dargestellten Absetzbandes 50. Die Spannstation 60 umfasst dabei insbesondere Komponenten, welche in Figur 2 von dem Fördergurt 52 verdeckt sind. Zu der Spannstation 60 gehört unter anderem die Spannrolle 65, welche um die Spannachse 75 drehbar ist.

Die Spannrolle 65 ist vorteilhaft zweiteilig ausgebildet und an einer Traverse 85 befestigt. Die Spannachse 75 ist dabei ortsfest an der besagten Traverse 85 gelagert. Die Traverse 85 ist um eine Schwenkachse 70 schwenkbar. Damit ist auch die Spannrolle 65 mit der Spannachse 75 um die Schwenkachse 70 schwenkbar. Die Schwenkachse 70 verläuft vorliegend in Vertikalrichtung Z. Somit verläuft die Schwenkachse 70 rechtwinklig zu der ersten Drehachse 71. Die Spannrichtung S verläuft dabei rechtwinklig, beziehungsweise tangential, zu der Schwenkachse 70. Die Spannachse 75 und die Schwenkachse 70 sind windschief zueinander ausgerichtet.

Die Spannrolle 65 ist von einer ersten Stirnfläche 83 und einer zweiten Stirnfläche 84 begrenzt. Die beiden Stirnflächen 83, 84 der Spannrolle 65 verlaufen rechtwinklig zu der Spannachse 75 und definieren jeweils ein Ende der Spannrolle 65 in Richtung der Spannachse 75.

Ein erster axialer Endbereich 81 der Spannrolle 65 erstreckt sich von der ersten Stirnfläche 83 in Richtung der Spannachse 75 auf die gegenüber liegende zweite Stirnfläche 84 zu. Auch erstreckt sich der erste axiale Endbereich 81 von der ersten Stirnfläche 83 in Richtung der Spannachse 75 von der zweiten Stirnfläche 84 weg. Eine Ausdehnung des ersten axialen Endbereichs 81 in Richtung der Spannachse 75 umfasst dabei etwa 10 % bis 20 % der Ausdehnung der Spannrolle 65 in Richtung der Spannachse 75.

Ein zweiter axialer Endbereich 82 der Spannrolle 65 erstreckt sich von der zweiten Stirnfläche 84 in Richtung der Spannachse 75 auf die gegenüber liegende erste Stirnfläche 83 zu. Auch erstreckt sich der zweite axiale Endbereich 82 von der zweiten Stirnfläche 84 in Richtung der Spannachse 75 von der ersten Stirnfläche 83 weg. Eine Ausdehnung des zweiten axialen Endbereichs 82 in Richtung der Spannachse 75 umfasst dabei etwa 10 % bis 20 % der Ausdehnung der Spannrolle 65 in Richtung der Spannachse 75.

Die Schwenkachse 70 ist in dem ersten axialen Endbereich 81 der Spannrolle 65 angeordnet. Die Spannrolle 65 verläuft annähernd in Querrichtung Y, ist aber, wie bereits erwähnt, in Spannrichtung S bewegbar, und insbesondere um die Schwenkachse 70 schwenkbar. Somit kann die Spannrolle 65 geneigt zu der Querrichtung Y verlaufen.

In dem zweiten axialen Endbereich 82 der Spannrolle 65 sind Stellmittel zum Bewegen der Spannrolle 65 in die Spannrichtung S vorgesehen. Die Stellmittel umfassen dabei den bereits erwähnten Stellmotor 91 und das Spindelgetriebe 92. Die Traverse 85 ist derart mit dem Spindelgetriebe 92 gekoppelt, dass bei einer Drehung des Stellmotors 91 die Traverse 85 um die Schwenkachse 70 geschwenkt wird. Dabei wird der zweite axiale Endbereich 82 der Spannrolle 65 in die Spannrichtung S ausgelenkt.

Die Spannstation 60 umfasst auch eine hier nicht dargestellte Sensoreinheit zur Erkennung mindestens einer Bandkante 87, 88 des Fördergurts 52 und eine elektronische Regeleinrichtung. Die Regeleinrichtung ist mit der Sensoreinheit und mit dem Stellmotor 91 über entsprechende Datenleitungen verbunden. Wenn die Sensoreinheit einen Versatz der Bandkante 87, 88 des Fördergurts 52 in der Querrichtung Y detektiert, so steuert die Regeleinrichtung den Stellmotor 91 entsprechend an. Dadurch wird die Spannrolle 65 derart um die Schwenkachse 70 geschwenkt, dass der besagte Versatz der Bandkante 87, 88 in der Querrichtung Y wieder ausgeglichen wird.

Die Auslenkung des zweiten axialen Endbereichs 82 in die Spannrichtung S ist dabei relativ gering im Vergleich zu der Ausdehnung der Spannrolle 65 in Richtung der Spannachse 75, beziehungsweise im Verhältnis zu einem Abstand des Spindelgetriebes 92 zu der Schwenkachse 70. Die Spannrichtung S verläuft somit zumindest annähernd rechtwinklig zu der Querrichtung Y und zumindest annähernd parallel zu der Längsrichtung X.

In dem ersten axialen Endbereich 81 der Spannrolle 65 sind ferner Spannmittel zum Bewegen der Spannrolle 65 in die Spannrichtung S vorgesehen. Erfindungsgemäß umfassen die Spannmittel die bereits erwähnte manuell betätigbare Gewindespindel 93. Bei entsprechender Betätigung der Gewindespindel 93 wird die Traverse 85 mit der Schwenkachse 70 in die Spannrichtung S bewegt. Dabei wird auch der erste axiale Endbereich 81 der Spannrolle 65 in die Spannrichtung S bewegt.

In einer nicht erfindungsgemäßen Ausgestaltung umfassen die Spannmittel in dem ersten axialen Endbereich 81 der Spannrolle 65 ebenfalls einen Stellmotor 91 und ein Spindelgetriebe 92, ähnlich wie die Stellmittel in dem zweiten axialen Endbereich 82 der Spannrolle 65. Vorzugsweise ist dabei auch eine Sensoreinheit zur Erkennung der mechanischen Spannung des Fördergurts 52 vorgesehen. Dadurch ist eine gleichzeitige Regelung der Spannung des Fördergurts 52 ermöglicht.

Die Erfindung ist nicht auf die hier beschriebenen Ausführungsbeispiele beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 10: Palettiervorrichtung
- 12: Fußboden
- 20: Hubvorrichtung
- 31: Wagen
- 50: Absetzband
- 52: Fördergurt
- 53: Förderfläche
- 55: Antriebsmotor
- 57: Seitenwand
- 60: Spannstation
- 61: erste Umlenkrolle
- 62: zweite Umlenkrolle
- 63: dritte Umlenkrolle
- 65: Spannrolle
- 67: Antriebstrommel
- 70: Schwenkachse
- 71: erste Drehachse
- 72: zweite Drehachse
- 73: dritte Drehachse
- 75: Spannachse
- 77: Antriebsachse
- 81: erster axialer Endbereich
- 82: zweiter axialer Endbereich
- 83: erste Stirnfläche
- 84: zweite Stirnfläche
- 85: Traverse
- 87: erste Bandkante
- 88: zweite Bandkante
- 91: Stellmotor
- 92: Spindelgetriebe
- 93: Gewindespindel
- 110: Zuführvorrichtung
- A: Schnittlinie
- S: Spannrichtung
- X: Längsrichtung
- Y: Querrichtung
- Z: Vertikalrichtung

## Patentansprüche

1. Absetzband (50) für eine Palettiervorrichtung (10), umfassend
einen umlaufenden Fördergurt (52), welcher eine Förderfläche (53) zur Förderung von Gütern definiert,
eine um eine erste Drehachse (71) drehbare erste Umlenkrolle (61),
eine um eine Spannachse (75) drehbare Spannrolle (65), welche in eine Spannrichtung (S) bewegbar ist, Spannmittel und
eine um eine zweite Drehachse (72) drehbare zweite Umlenkrolle (62), wobei
die zweite Drehachse (72) parallel zu der ersten Drehachse (71) verläuft, und wobei
die Spannrolle (65) um eine Schwenkachse (70) schwenkbar und derart bewegbar ist, dass die Spannachse (75) geneigt zu der ersten Drehachse (71) und geneigt zu der zweiten Drehachse (72) verläuft und die Schwenkachse (70) in einem ersten axialen Endbereich (81) der Spannrolle (65) angeordnet ist, wobei in dem ersten axialen Endbereich (81) der Spannrolle (65) die Spannmittel zum Bewegen der Spannrolle (65) in die Spannrichtung (S) vorgesehen sind, **dadurch gekennzeichnet, dass** die Spannmittel eine manuell betätigbare Gewindespindel (93) umfassen.

2. Absetzband (50) nach Anspruch 1, **dadurch gekennzeichnet, dass** die Schwenkachse (70) rechtwinklig zu der ersten Drehachse (71) verläuft.

3. Absetzband (50) nach einem der Ansprüche 1 bis 2, **dadurch gekennzeichnet, dass**
die Schwenkachse (70) rechtwinklig zu der Förderfläche (53) des Fördergurt (52) verläuft.

4. Absetzband (50) nach einem der Ansprüche 1 bis 3, **dadurch gekennzeichnet, dass**
die Spannachse (75) die Schwenkachse (70) schneidet.

5. Absetzband (50) nach Anspruch 1, **dadurch gekennzeichnet, dass**
in einem zweiten axialen Endbereich (82) der Spannrolle (65), welcher dem ersten axialen Endbereich (81) der Spannrolle (65) gegenüber liegt, Stellmittel zum Bewegen der Spannrolle (65) in die Spannrichtung (S) vorgesehen sind.

6. Absetzband (50) nach Anspruch 5, **dadurch gekennzeichnet, dass**
die Stellmittel einen Stellmotor (91) und ein Spindelgetriebe (92) umfassen.

7. Absetzband (50) nach einem der Ansprüche 2 bis 6, **dadurch gekennzeichnet, dass**
die Spannrichtung (S) rechtwinklig zu der ersten Drehachse (71) sowie rechtwinklig zu der Schwenkachse (70) verläuft.

8. Absetzband (50) nach einem der vorstehenden Ansprüche, **dadurch gekennzeichnet, dass**
eine um eine dritte Drehachse (73) drehbare dritte Umlenkrolle (63) vorgesehen ist, wobei
die dritte Drehachse (73) parallel zu der ersten Drehachse (71) verläuft.

9. Absetzband (50) nach einem der vorstehenden Ansprüche, **dadurch gekennzeichnet, dass**
eine um eine Antriebsachse (77) drehbare Antriebstrommel (67) vorgesehen ist, wobei
die Antriebsachse (77) parallel zu der ersten Drehachse (71) verläuft.

10. Palettiervorrichtung (10), umfassend mindestens ein Absetzband (50) nach einem der vorstehenden Ansprüche.

## Claims

1. Set-down belt (50) for a palletizing apparatus (10), comprising
a circulating conveyor belt (52) which defines a conveying surface (53) for conveying goods,
a first deflection roller (61) which can be rotated about a first axis of rotation (71),
a tensioning roller (65) which can be rotated about a tensioning axis (75) and
can be moved in a tensioning direction (S),
tensioning means, and
a second deflection roller (62) which can be rotated about a second axis of rotation (72), wherein
the second axis of rotation (72) runs parallel to the first axis of rotation (71), and wherein
the tensioning roller (65) can be pivoted about a pivot axis (70) and moved in such a way that the tensioning axis (75) is inclined to the first axis of rotation (71) and inclined to the second axis of rotation (72), and the pivot axis (70) is arranged in a first axial end region (81) of the tensioning roller (65), wherein the tensioning means for moving the tensioning roller (65) in the tensioning direction (S) are provided in the first axial end region (81) of the tensioning roller (65), **characterized in that**
the tensioning means comprise a manually actuable threaded spindle (93).

2. Set-down belt (50) according to Claim 1, **characterized in that**
the pivot axis (70) runs at right angles to the first axis of rotation (71).

3. Set-down belt (50) according to either of Claims 1 and 2, **characterized in that**
the pivot axis (70) runs at right angles to the conveying surface (53) of the conveyor belt (52).

4. Set-down belt (50) according to one of Claims 1 to 3, **characterized in that**
the tensioning axis (75) intersects the pivot axis (70).

5. Set-down belt (50) according to Claim 1, **characterized in that**
adjusting means for moving the tensioning roller (65) in the tensioning direction (S) are provided in a second axial end region (82) of the tensioning roller (65), which lies opposite the first axial end region (81) of the tensioning roller (65).

6. Set-down belt (50) according to Claim 5, **characterized in that**
the actuating means comprise an actuating motor (91) and a spindle gear (92).

7. Set-down belt (50) according to one of Claims 2 to 6, **characterized in that**
the tensioning direction (S) runs at right angles to the first axis of rotation (71) and at right angles to the pivot axis (70).

8. Set-down belt (50) according to one of the preceding claims, **characterized in that**
a third deflection roller (63) which can be rotated about a third axis of rotation (73) is provided, wherein
the third axis of rotation (73) runs parallel to the first axis of rotation (71).

9. Set-down belt (50) according to one of the preceding claims, **characterized in that**
a drive drum (67) which can be rotated about a drive axis (77) is provided, wherein
the drive axis (77) runs parallel to the first axis of rotation (71).

10. Palletizing apparatus (10), comprising at least one set-down belt (50) according to one of the preceding claims.

## Revendications

1. Bande de dépose (50) pour un dispositif de palettisation (10), comprenant
une courroie de transport circulante (52) qui définit une surface de transport (53) pour le transport de marchandises,
un premier rouleau de renvoi (61) rotatif autour d'un premier axe de rotation (71),
un rouleau tendeur (65) rotatif autour d'un axe de tension (75),
qui est apte à être déplacé dans une direction de tension (S),
des moyens de tension, et
un deuxième rouleau de renvoi (62) rotatif autour d'un deuxième axe de rotation (72),
le deuxième axe de rotation (72) s'étendant parallèlement au premier axe de rotation (71), et
le rouleau tendeur (65) étant apte à pivoter autour d'un axe de pivotement (70) et étant déplaçable de telle sorte que l'axe de tension (75) s'étende de manière inclinée par rapport au premier axe de rotation (71) et inclinée par rapport au deuxième axe de rotation (72) et que l'axe de pivotement (70) soit agencé dans une première zone d'extrémité axiale (81) du rouleau tendeur (65), les moyens de tension destinés à déplacer le rouleau tendeur (65) dans la direction de tension (S) étant prévus dans la première zone d'extrémité axiale (81) du rouleau tendeur (65), **caractérisée en ce que**
les moyens de tension comprennent une broche filetée (93) actionnable manuellement.

2. Bande de dépose (50) selon la revendication 1, **caractérisée en ce que**
l'axe de pivotement (70) s'étend perpendiculairement au premier axe de rotation (71).

3. Bande de dépose (50) selon l'une des revendications 1 à 2, **caractérisée en ce que**
l'axe de pivotement (70) est perpendiculaire à la surface de transport (53) de la bande transporteuse (52).

4. Bande de dépose (50) selon l'une des revendications 1 à 3, **caractérisée en ce que**
l'axe de tension (75) coupe l'axe de pivotement (70).

5. Bande de dépose (50) selon la revendication 1, **caractérisée en ce que**
dans une deuxième zone d'extrémité axiale (82) du rouleau tendeur (65), qui est opposée à la première zone d'extrémité axiale (81) du rouleau tendeur (65), sont prévus des moyens de réglage pour déplacer le rouleau tendeur (65) dans la direction de tension (S).

6. Bande de dépose (50) selon la revendication 5, **caractérisée en ce que**
les moyens de réglage comprennent un servomoteur (91) et un mécanisme à vis (92).

7. Bande de dépose (50) selon l'une des revendications 2 à 6, **caractérisée en ce que**
la direction de tension (S) est perpendiculaire au premier axe de rotation (71) ainsi que perpendiculaire à l'axe de pivotement (70).

8. Bande de dépose (50) selon l'une des revendications précédentes, **caractérisée en ce que**
un troisième rouleau de renvoi (63) rotatif autour d'un troisième axe de rotation (73) est prévu,
le troisième axe de rotation (73) étant parallèle au premier axe de rotation (71).

9. Bande de dépose (50) selon l'une des revendications précédentes, **caractérisée en ce que**
un tambour d'entraînement (67) rotatif autour d'un axe d'entraînement (77) est prévu,
l'axe d'entraînement (77) s'étendant parallèlement au premier axe de rotation (71).

10. Dispositif de palettisation (10) comprenant au moins une bande de dépose (50) selon l'une des revendications précédentes.
